Europäisches Patentamt

European Patent Office

Office européen des brevets

(19)

(11) Veröffentlichungsnummer: **0 036 958**
**B1**

# EUROPÄISCHE PATENTSCHRIFT

(12)

(45) Veröffentlichungstag der Patentschrift:
24.09.86

(51) Int. Cl.⁴: **B 65 G 15/60**

(21) Anmeldenummer: **81101500.7**

(22) Anmeldetag: **03.03.81**

(54) **Tragelement für Transportbänder.**

(30) Priorität: **29.03.80 DE 3012275**

(43) Veröffentlichungstag der Anmeldung:
**07.10.81 Patentblatt 81/40**

(45) Bekanntmachung des Hinweises auf die Patenterteilung:
**24.09.86 Patentblatt 86/39**

(84) Benannte Vertragsstaaten:
**AT CH DE FR GB IT LI**

(56) Entgegenhaltungen:
**DE-A-2 214 046**
**US-A-3 596 752**
**US-A-3 605 994**
**US-A-3 825 108**

(73) Patentinhaber: **ROBERT BOSCH GMBH, Postfach
50, D-7000 Stuttgart 1 (DE)**

(72) Erfinder: **Drexel, Peter, Plieningerstrasse 33, D-7031
Steinenbronn (DE)**
Erfinder: **Leisner, Ernst, Dipl.- Ing.,
Wettertalstrasse 4, D-7257 Ditzingen (DE)**
Erfinder: **Rothfuss, Peter, J.- S.- Bach- Strasse 6/1,
D-7257 Ditzingen 5 (DE)**

## Beschreibung

### Stand der Technik

Die Erfindung geht aus von einem Tragelement nach der Gattung des Hauptanspruchs. Bei bekannten Tragelementen dieser Gattung (US-A-3 605 994) sind die Seitenwände und der die Seitenwände verbindende Steg als getrennte Einzelteile ausgebildet, die durch in die Längsnuten der Seitenwände eingeführte Schrauben miteinander verbunden sind. Diese Ausführung ist verhältnismäßig aufwendig, weil sie zusätzliche Teile und zusätzliche Arbeitsgänge bei der Herstellung des Tragelementes benötigt, wobei auf einen paßgerechten Sitz der Einzelteile besonders geachtet werden muß.

### Vorteile der Erfindung

Das erfindungsgemäße Tragelement mit den kennzeichnenden Merkmalen des Hauptanspruchs hat demgegenüber den Vorteil, daß das Tragelement aus einem Stück besteht und beispielsweise im Strangpreßverfahren in einem einzigen Arbeitsgang hergestellt werden kann. Zusätzliche Verbindungsteile und zusätzliche Arbeitsgänge für das Zusammenbauen von Einzelteilen entfallen und die in verschiedenen Ebenen und Winkellagen zueinander angeordneten Führungs- und Stützflächen am Tragelement für die Verbindungsmittel und andere Anbauteile sind durch die Formgebung des Herstellwerkzeugs definiert und werden bei der Herstellung des Tragelementes automatisch exakt eingehalten. Das Tragelement ist universell einsetzbar und mit anderen Tragelementen leicht verbindbar. Insgesamt ergibt sich eine erhebliche Kosteneinsparung beim Bau von Transport- und Montagestraßen mit derartigen Tragelementen.

Durch die in den Unteransprüchen aufgeführten Maßnahmen sind vorteilhafte Weiterbildungen des im Hauptanspruch angegebenen Tragelementes möglich.

### Zeichnung

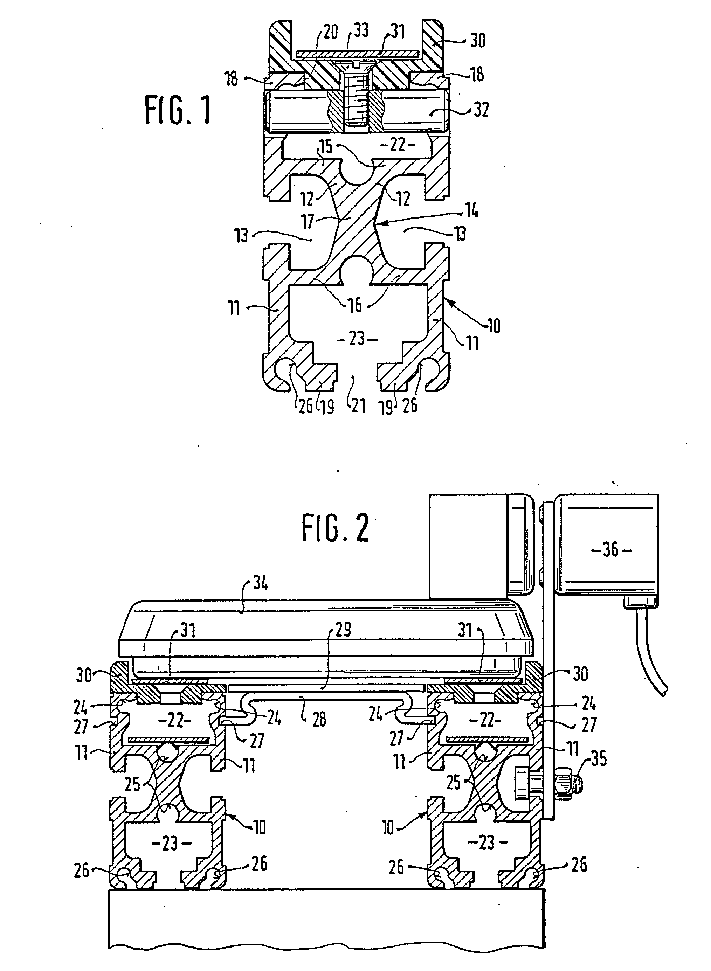

Ein Ausführungsbeispiel der Erfindung ist in der Zeichnung dargestellt und in der nachfolgenden Beschreibung unter Angabe weiterer Vorteile näher erläutert. Es zeigen Figur 1 einen Schnitt durch das erfindungsgemäße Tragelement und Figur 2 eine Anordnung des erfindungsgemäßen Tragelements in einer Doppelgurtband-Anlage.

### Beschreibung des Ausführungsbeispiels

Das erfindungsgemäße Tragelement 10 hat in seinen äußeren Konturen ein rechteckiges Querschnittsprofil und ist bezüglich seiner Vertikalachse symmetrisch ausgebildet. Das Tragelement 10 weist zwei parallel zueinander ausgerichtete Seitenwände 11 auf, die in nach innen eingezogenen Wandabschnitten 12 mit hinterschnittenen Längsnuten 13 zur Aufnahme von Befestigungsmitteln, wie z.B. Hammerschrauben oder dergleichen, versehen sind. Die nach innen eingezogenen Wandabschnitte 12 sind einstückig aneinander angeformt und so gestaltet, daß sie einen die beiden Seitenwände 11 miteinander verbindenden, profilierten Steg 14 bilden, welcher mit zwei im Abstand parallel zueinander verlaufenden Querwangen 15 und 16 versehen ist, die über ein senkrechtes Stegteil 17 miteinander verbunden sind.

Die Seitenwände 11 sind an ihren oberen und unteren Längsrändern je mit einer nach innen gerichteten Randleiste 18, 19 versehen, die paarweise zwischen sich je eine Längsöffnung 20, 21 begrenzen. Die obere Längsöffnung 20 führt in einen oberen Hohlraum 22, der von den Seitenwänden 11 und der oberen Querwange 15 des Steges 14 begrenzt ist. Die untere Längsöffnung 21 führt in einen unteren Hohlraum 23, der von den Seitenwänden 11 und der unteren Querwange 16 des Steges 14 begrenzt ist.

Das Tragelement 10 ist ferner mit in Längsrichtung verlaufenden, nach innen offenen zylindrischen Nuten 24, 25 versehen (Figur 2), die zur Aufnahme von Stiften zum Verbinden von zwei Tragelementen 10 dienen können. Die obere Nut 25 kann zum Einschnappen von nicht näher dargestellten Federelementen als Auflage für den rücklaufenden Strang eines Fördergurtes dienen.

Das Tragelement 10 enthält ferner in seinem unteren Bereich Längsnuten 26 und im oberen Bereich an den Seitenwanden 11 je eine weitere Längsnut 27 (Figur 2). Diese dienen zum Einsetzen von Federelementen 28, auf denen Abdeckbleche 29 zwischen den beiden Gurten befestigt werden können.

In die obere Längsöffnung 20 des Tragelementes 10 ist ein Führungsprofil 30 für den oberen Strang 31 des Fördergurtes eingesetzt. Das Führungsprofil 30 ist in seinem unteren Bereich genau in die Längsöffnung 20 eingepaßt. Die Verbindung zwischen dem Tragelement 10 und dem Führungsprofil 30 erfolgt über einen querliegenden, in den Seitenwänden 11 gelagerten Bolzen 32 und eine Senkschraube 33, die das Führungsprofil 30 durchsetzt und in eine Gewindebohrung des Bolzens 32 eingreift. Der untere Bereich des Führungsprofils 30 kann jedoch auch schwalbenschwanzartig ausgebildet sein und in den oberen Bereich des Tragelements 10 eingreifen. Es ist auch eine Art Schnappverbindung denkbar.

Das Führungsprofil 30 kann gemäß Figur 1 zwei seitliche Führungsstege für den oberen Strang 31 des Fördergurtes haben. Bei dem in Figur 2 dargestellten Doppelgurt-Montageband werden auf zwei stetig umlaufenden Fördergurten lose aufliegende Werkstückträger 34 befördert. Bei dieser Anordnung sind die Führungsprofile 30 nur an ihren außenliegenden Längsrändern mit einem Führungssteg versehen, der gleichzeitig auch den Werkstückträger 34 führt. An der außenliegenden Seitenwand 11 des einen Tragelements 10 ist durch Schrauben 35 eine Codiereinrichtung 36 befestigt.

Der untere Hohlraum 23 des Tragelementes 10 dient ebenfalls zur Aufnahme von Befestigungsmitteln, wie z.B. Hammerschrauben, und ist aus Gewichtsersparnis möglichst groß ausgeführt.

**Patentansprüche**

1. Tragelement für Transportbänder, insbesondere zur Verwendung bei Doppelgurtbändern, mit zwei parallel zueinander ausgerichteten Seitenwänden (11), die in nach innen eingezogenen Abschnitten (12) mit hinterschnittenen Längsnuten (13) zum Aufnehmen von Verbindungsmitteln oder dergleichen versehen und über einen durchlaufenden Steg (14) fest miteinander verbunden sind, welcher sich innerhalb des von den Seitenwänden (11) begrenzten Querschnittsprofils erstreckt und zwei im Abstand parallel zueinander verlaufende, über wenigstens einen parallel zu den Seitenwänden (11) verlaufenden senkrechten Stegteile (17) verbundene Querwangen (15, 16) hat, die einen von der Kopfseite her zugänglichen oberen Hohlraum (22) von einem von der Fußseite her zugänglichen unteren Hohlraum (23) im Inneren des Tragelements voneinander trennen, dadurch gekennzeichnet, daß die die Längsnuten (13) umschließenden, nach innen eingezogenen Wandabschnitte (12) der Seitenwände (11) einstückig aneinander angeformt sind dergestalt, daß sie selbst die Querwangen (15, 16) und einen einzigen, die Querwangen (15, 16) verbindenden senkrechten Stegteil (17) bilden.

2. Tragelement nach Anspruch 1, dadurch gekennzeichnet, daß die Seitenwände (11) an ihren Längsrändern mit nach innen gerichteten Randleisten (18, 19) versehen sind, die paarweise zwischen sich je eine Längsöffnung (20, 21) begrenzen.

3. Tragelement nach Anspruch 2, dadurch gekennzeichnet, daß in die an der Kopfseite gebildete Längsöffnung (20) ein Band-Führungsprofil (30) eingepaßt ist.

4. Tragelement nach Anspruch 3, dadurch gekennzeichnet, daß das Band-Führungsprofil (30) mittels eines im oberen Hohlraum (22) angeordneten, in den Seitenwänden (11) gelagerten Bolzens (32) und einer das Band-Führungsprofil (30) durchsetzenden, in ein Gewinde des Bolzens (32) eingreifenden Senkschraube (33) befestigt ist.

5. Tragelement nach Anspruch 3 oder 4, dadurch gekennzeichnet, daß der obere Hohlraum (22) zur Aufnahme des rücklaufenden Stranges des Fördergurts ausgebildet ist.

6. Tragelement nach einem der Ansprüche 2 bis 5, dadurch gekennzeichnet, daß der untere Hohlraum (23) als hinterschnittene Längsnut zur Aufnahme von Verbindungsmitteln oder dergleichen ausgebildet ist.

7. Tragelement nach einem der vorhergehenden Ansprüche, dadurch gekennzeichnet, daß im Bereich der Ecken des Querschnittsprofils weitere zylindrische Längsnuten (24, 26) vorgesehen sind für Verbindungsmittel der Tragelemente untereinander.

**Claims**

1. Supporting element for conveyor belts, in particular for application in the case of twin-belt bands, having two side walls (11) which are aligned parallel to one another, are provided in inwardly drawn portions (12) having undercut longitudinal grooves (13) for accommodating connecting means or the like and are firmly connected to one another via a continuous web (14) which extends within the cross-sectional profile defined by the side walls (11) and has two transverse cheeks (15, 16) which run parallel to one another at a distance, are connected via at least one perpendicular web part (17) running parallel to the side walls (11), and which, in the inside of the supporting element, separate an upper hollow space (22), accessible from the head side, from a lower hollow space (23) accessible from the base side, characterized in that the inwardly drawn wall portions (12) of the side walls (11), which wall portions (12) enclose the longitudinal grooves (13), are integrally formed onto one another in one piece in such a way that they themselves form the transverse cheeks (15, 16) and a single perpendicular web part (17) connecting the transverse cheeks (15, 16).

2. Supporting element according to Claim 1, characterized in that the side walls (11), on their longitudinal edges, are provided with inward-facing edge strips (18, 19) which define in pairs between them in each case one longitudinal opening (20, 21).

3. Supporting element according to Claim 2, characterized in that a belt guide profile (30) is fitted into the longitudinal opening (20) formed on the head side.

4. Supporting element according to Claim 3, characterized in that the belt guide profile (30) is fixed by means of a pin (32) arranged in the upper hollow space (22) and mounted in the side walls (11), and by means of a countersink screw (33) penetrating through the belt guide profile (30) and engaging in a thread of the pin (32).

5. Supporting element according to Claim 3 or 4, characterized in that the upper hollow space (22) is made for accommodating the return strand of the conveyor belt.

6. Supporting element according to one of Claims 2 to 5, characterized in that the lower hollow space (23) is made as an undercut longitudinal groove for accommodating connecting means or the like.

7. Supporting element according to one of the preceding claims, characterized in that further cylindrical longitudinal grooves (24, 26) are provided, in the area of the corners of the cross-sectional profile for connecting means for connecting the supporting elements to one another.

## Revendications

1°) Elément support pour convoyeur à bande, en particulier pour emploi dans le cas de tapis à double courroie, comportant deux parois latérales (11) qui sont parallèles et dirigées l'une vers l'autre, qui comportent, dans des portions (12) rentrées vers l'intérieur des reinures longitudinales (13) en contre-dépouille pour recevoir des moyens de liaison ou analogues et qui sont solidarisées l'une avec l'autre par l'intermédiaire d'une âme continue (14) qui s'étend à l'intérieur du profil de coupe limité par les parois latérales (11) et qui présente deux parois transversales (15, 16) qui courent à une certaine distance l'une de l'autre et parallèlement l'une à l'autre, qui sont reliées par au moins une partie d'âme (17) verticale et paralléle aux parois latérales (11) et qui séparent l'un de l'autre, à l'intérieur de l'élément support, un volume creux supérieur (22) accessible côté tête d'un volume creux inférieur (23) accessible côté pied, caractérisé en ce que les portions de paroi (12), rentrées vers l'intérieur et entourant les rainures longitudinales (13), des parois latéreles (11) sont venues de forme l'une contre l'autre, d'une pièce, de façon telle qu'elles forment elles-mêmes les parois transversales (15, 16) et une unique partie d'âme (17), verticale reliant les parois transversales (15, 16).

2°) Elément support selon la revendication 1, caractérisé en ce que les parois latérales (33) présentent, sur leurs bords longitudinaux, des rebords (18, 19) qui sont dirigés vers l'intérieur et qui limitent deux à deux entre eux chaque fois une ouverture longitudinale (20, 23).

3°) Elément support selon le revendication 2, caractérisé en ce qu'un profil de guidage de tapis (30) est ajusté dans l'ouverture longitudinale (20) formée côté tête.

4°) Elément support selon le revendication 3, caractérisé en ce que le profil de guidage de tapis (30) est fixé au moyen d'une goupille (32) disposée dans le volume creux supérieur (22) et portant dans les parois latérales (11) et d'une vis fraisée (11) traversant le profil de guidage du tapis (30) et se vissant dans un taraudage de goujon (32).

5°) Elément support selon la revendicetion 4, caractérisé en ce que le volume creux supérieur (22) est conçu pour recevoir le brin de retour du tapis convoyeur.

6°) Elément support selon l'une des revendications 2 à 5, caractérisé en ce que le volume creux intérieur (23) est conçu sous forme de rainure longitudinale en contre-dépouille pour recevoir des moyens de liaison ou analogues.

7°) Elément support selon l'une des revendications précédentes, caractérisé en ce que dans la zone des angles du profil de coupe, d'autres rainures longitudinales cvlindriques (24, 26) sont prévues pour des moyens permettant de réunir les éléments supports les uns avec les autres.

FIG. 1

FIG. 2